# EUROPÄISCHE PATENTSCHRIFT

(11) **EP 2 284 403 B1**
(45) Veröffentlichungstag und Bekanntmachung des Hinweises auf die Patenterteilung: **02.03.2016**
(21) Anmeldenummer: 10170276.9
(22) Anmeldetag: 21.07.2010
(51) Int. Cl.: F15B 13/04

(54) **Absperrventil**
Blocking valve
Soupape d'arrêt

(30) Priorität: 24.07.2009 DE 102009028008
(43) Veröffentlichungstag der Anmeldung: 16.02.2011
(73) Patentinhaber: Deere & Company, Moline, IL 61265-8098 (US)
(72) Erfinder: Bauer, Wolfgang, Dr.-Ing., 69469 Weinheim (DE)
(74) Vertreter: Reichert, Christian

(56) Entgegenhaltungen:
- DE-A1- 2 358 969
- US-A- 2 234 795
- US-A- 5 632 294

## Beschreibung

Die Erfindung betrifft ein Absperrventil für eine hydraulische Anordnung, mit einem betätigbaren Ventilschieber zum Einstellen einer Schließstellung und einer Öffnungsstellung.

Absperrventile, insbesondere Kugelventile bzw. Absperrhähne, insbesondere Kugelhähne, werden verwendet, um einen Hydraulikfluss wahlweise zu unterbrechen oder zuzulassen. Das Absperren bzw. Schließen und Öffnen erfolgt üblicherweise durch einen Hebel, der um 90° verdreht werden kann. In vielen Fällen baut sich im abgesperrten Zustand eine Druckdifferenz zwischen den Anschlussseiten des Absperrventils auf, woraufhin das hydraulische System bzw. die hydraulische Anordnung beim Öffnen des Absperrhahns einen Druckausgleich anstrebt, was mit erheblichen, schlagartig ansteigenden Volumenströmen verbunden ist. Diese schlagartigen Zustandsänderungen sind oftmals unerwünscht. Insbesondere bei landwirtschaftlichen Maschinen, wie z.B. Traktoren oder Erntemaschinen bedingt dieser Druckausgleichsvorgang an hydraulischen Federungssystemen eine schnelle, ruckartige Bewegung der Federungszylinder und damit auch des Chassis und der daran angebauten Arbeitsgeräte. Je höher die Druckdifferenz im abgesperrten Zustand war, umso stärker ist die Bewegung.

Üblicherweise können Absperrventile in einem Zug geöffnet werden, so dass direkt der vollständige Öffnungsquerschnitt freigegeben wird. Zwar kann der Bediener versuchen, das Absperrventil dosiert zu öffnen, jedoch ist dies insbesondere aufgrund hoher Öffnungskräfte und des als Stick-Slip-Effekt bekannten Losbrechens des Absperrventilschiebers oftmals nur sehr schwer möglich und selten zuverlässig reproduzierbar. Aus diesem Grund wird zumeist unbeabsichtigt unmittelbar ein relativ großer Querschnitt geöffnet, woraufhin eine Druckangleichung bzw. ein Druckausgleich schlagartig und mit den zuvor genannten negativen Folgen erfolgt.

Ein Absperrventil gemäß dem Oberbegriff von Anspruch 1 ist aus US 2,234,795 A1 bekannt.

Die der Erfindung zugrunde liegende Aufgabe wird darin gesehen, ein Absperrventil der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Absperrventil der eingangs genannten Art mit einer Blockiereinrichtung zur Begrenzung der Betätigung des Ventilschiebers auf eine zwischen der Schließstellung und der Öffnungsstellung befindliche Zwischenstellung versehen, in welcher der Öffnungsquerschnitt des Absperrventils nur ein Bruchteil des in der Öffnungsstellung vorliegenden Öffnungsquerschnitts beträgt. Die Blockiereinrichtung ist derart ausgebildet, dass die Begrenzung der Betätigung des Ventilschiebers durch die Blockiereinrichtung in Abhängigkeit eines Druckdifferenzwertes zwischen einem Druck vor und hinter dem Absperrventil erfolgt, wobei die Begrenzung bei Unterschreiten eines vorgebbaren Druckdifferenzwerts aufhebbar ist. Damit wird ein Absperrventil mit einer Blockiereinrichtung geschaffen, durch die bei hohen Druckdifferenzen eine Druckangleichung bzw. ein Druckausgleich und daraus resultierende Dynamiken in der hydraulischen Anordnung auf ein kontrolliertes, langsames Niveau gebracht werden. Erst bei erfolgtem Druckausgleich bzw. Unterschreiten eines vorgebbaren Druckdifferenzwertes wird die Blockade bzw. die Begrenzung der Betätigung des Absperrventils aufgehoben und erlaubt, dass das Absperrventil bzw. die hydraulische Anordnung mit einem vorgesehenem niedrigen Strömungswiderstand in vollständiger Öffnungsstellung des Absperrventils betrieben werden kann.

Das Absperrventil umfasst eine Blockiereinrichtung mit einem Blockierelement, welches mit dem Ventilschieber oder mit einem mit dem Ventilschieber verbundenen Ventilschieberelement in Eingriff bringbar ist, um die Betätigung des Ventilschiebers in Richtung der Öffnungsstellung auf die Zwischenstellung zu begrenzen. Dass Blockierelement kann dabei auf vielfältige Weise ausgebildet sein und mit dem Ventilschieber oder mit einem anderen Bauteil, welches als Ventilschieberelement mit dem Ventilschieber gekoppelt ist, in Eingriff treten und dadurch ein Betätigen des Ventilschiebers blockieren bzw. auf ein bestimmtes vorgegebenes Maß begrenzen.

Der Ventilschieber kann als Drehschieber, beispielsweise in Form eines drehbaren Zylinders, ausgebildet sein und durch Verdrehen von einer Schließstellung in eine Öffnungsstellung bzw. Zwischenstellung gebracht werden. Hierbei wird demnach ein Drehmechanismus durch das Blockierelement begrenzt bzw. blockiert. Es ist jedoch auch denkbar, eine Begrenzung eines linear verschiebbaren Ventilschiebers in oben genannter Weise vorzunehmen, so dass ein Verschieben blockiert bzw. begrenzt wird.

Das Absperrventil kann in Form eines Kugelventils und der Ventilschieber als drehbarer Kugelventilschieber ausgebildet sein, wobei dieser durch Verdrehen von einer Schließstellung in eine Öffnungsstellung bzw. Zwischenstellung bringbar ist. Bei einem linear verschiebbaren Ventilschieber könnten entsprechend durch lineare Verschiebung die genannten Stellungen erzielt werden.

Das Blockierelement kann beispielsweise durch einen in Abhängigkeit der Druckdifferenz hydraulisch gesteuerten Stellkolben verstellbar sein, wobei das Blockierelement durch den Stellkolben in eine Blockierstellung bringbar ist, in der das Blockierelement mit dem Ventilschieber oder mit einem damit verbundenen Ventilschieberelement in Eingriff steht und die Betätigung des Ventilschiebers in Richtung der Öffnungsstellung auf die Zwischenstellung begrenzt. Der Stellkolben könnte auch elektronisch beispielsweise elektromechanisch bewegbar sein, wobei er beispielsweise über den Druck ermittelnde Sensoren (Drucksensoren) und einer entsprechenden ein Steuersignal generierenden elektronischen Steuereinheit und durch diese angesteuerte elektromagnetische Stellmittel, beispielsweise Magnetspulen, ansteuerbar wäre. Auch ein anstelle von Magnetspulen über elektrische Stellmittel ansteuerbarer Stellkolben, beispielsweise durch einen Stell- oder Schrittmotor, wäre denkbar.

Anstelle eines Stellkolbens ist auch die direkte Ansteuerung des Blockierelements denkbar. Das Blockierelement könnte beispielsweise direkt (ohne Steuerkolben) durch in Abhängigkeit der Druckdifferenz elektronisch ansteuerbare Stellmittel verstellbar sein, wobei das Blockierelement durch die Stellmittel in eine Blockierstellung bringbar ist, in der das Blockierelement mit dem Ventilschieber oder mit einem damit verbundenen Ventilschieberelement in Eingriff steht und die Betätigung des Ventilschiebers in Richtung der Öffnungsstellung auf die Zwischenstellung begrenzt. Die Ansteuerung kann dabei auf ähnliche Weise mit einer mit Sensoren verbundenen elektronischen Steuerung erfolgen. Auch hier wäre die Anwendung von elektromagnetischen Schaltspulen denkbar, die das Blockierelement in Abhängigkeit von Drucksensoren und einer ein Steuersignal generierenden elektronischen Steuereinheit in eine Blockierstellung bringen.

In Bezug auf das Blockierelement kann dieses beispielsweise als Riegel ausgebildet sein. Ferner kann an dem Ventilschieber oder an dem Ventilschieberelement eine Aussparung bzw. Ausnehmung vorgesehen sein, beispielsweise in Form einer am Ventilschieber ausgebildeten Kreis- oder Ringabschnittsnut, in die das Blockierelement bzw. der Riegel eingreift und ein weiteres Verdrehen des Ventilschiebers in Richtung der Öffnungsstellung über die Zwischenstellung hinaus blockiert. Ferner kann das Ventilschieberelement als Kreisscheibe ausgebildet sein, an der eine über einen Teil ihres Umfangs ausgebildete Aussparung vorgesehen ist, in die der Riegel eingreift und ein weiteres Verdrehen des Ventilschiebers in Richtung der Öffnungsstellung über die Zwischenstellung hinaus blockiert. Über die Position und Größe der Aussparung kann dabei die Begrenzung der Betätigung des Ventilschiebers voreingestellt bzw. vorgegeben werden. Je nach Anordnung der Aussparung auf dem Ventilschieber bzw. auf dem Umfang der Kreisscheibe, erfolgt der Eingriff des Blockierelements in Bezug auf einen Drehwinkel oder Umfangsabschnitt des Ventilschiebers bzw. der Kreisscheibe früher oder später, so dass der Betätigungswinkel beim Verdrehen des Ventilschiebers, bis die Zwischenstellung erreicht ist, kleiner oder größer ausfällt.

Das oben beschriebene Absperrventil findet beispielsweise Anwendung in hydraulischen Anordnungen für landwirtschaftliche Fahrzeuge, an denen ein oder mehrere verschiedene hydraulische Verbraucher versorgt werden müssen. Derartige landwirtschaftliche Fahrzeuge sind beispielsweise Traktoren oder Schlepper aber auch Erntemaschinen wie Mähdrescher oder Feldhäcksler. Auch andere landwirtschaftliche Fahrzeuge wie Laderfahrzeuge oder Pflanzenschutzmaschinen können über derartige hydraulische Anordnungen verfügen. Ferner ist ein erfindungsgemäßes Absperrventil auch für hydraulische Anordnungen, wie sie beispielsweise in Baumaschinen und Forstmaschinen ausgebildet sind, geeignet und für die oben genannten Zwecke vorgesehen. Gleichermaßen ist ein erfindungsgemäßes Absperrventil auch für pneumatische Anordnungen geeignet, die beispielsweise auch an den oben genannten Fahrzeugen Anwendung finden können.

Das oben erwähnte erfindungsgemäße Absperrventil wird aus dem abgesperrten Zustand (Schließstellung) heraus nur teilweise bzw. partiell geöffnet, solange die Druckdifferenz zwischen den beiden Seiten des Absperrventils über einem bestimmten Maß bzw. Druckdifferenzwert liegt. Beispielsweise erfolgt dies dadurch, dass aufgrund der Druckdifferenz ein Steuerkolben oder Stellkolben in eine bestimmte Stellung gebracht wird, welcher ein Blockierelement in Form eines Riegels oder einer Sperrklinke in eine Aussparung an einem Ventilschieber oder beispielsweise einer mit dem Ventilschieber verbundenen Kurvenscheibe oder Kreisscheibe einrasten lässt. Die Kurvenscheibe bzw. Kreisscheibe ist am Ventilschieber befestigt, wodurch dann das Einrasten der Sperrklinke den möglichen Öffnungswinkel des Schiebers begrenzt. Dadurch kann zunächst die hohe Druckdifferenz abgebaut werden. Die geringe Öffnung lässt nur einen geringen Volumenstrom zu und die Bewegung der betroffenen Komponenten in der hydraulischen Anordnung während des Druckausgleichs erfolgt langsam. Sobald die Druckdifferenz eine Grenze unterschritten hat, wird der Steuerkolben bzw. Stellkolben zurück in eine Stellung bewegt, in der der Riegel bzw. die Sperrklinke aus der Kurvenscheibe bzw. Kreisscheibe ausrastet und der Ventilschieber wieder über den gesamten Verstellbereich bewegt werden kann, also auch vollständig geöffnet werden kann. Bei diesem Beispiel wurde unter anderem auch berücksichtigt, dass Druckdifferenzen in beiden Richtungen zu einem Verriegeln der Sperrklinke führen und dass der Mechanismus in das heute übliche Design von Absperrventilen bzw. Absperrkugelhähnen leicht integrierbar ist.

Anhand der Zeichnung, die zwei Ausführungsbeispiele der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: die schematische Seitenansicht eines landwirtschaftlichen Fahrzeugs mit einem in einer hydraulischen Anordnung angeordneten Absperrventil,
- Fig. 2a: einen schematischen Hydraulikschaltplan eines Ausführungsbeispiels eines erfindungsgemäßen Absperrventils in einer Zwischenstellung mit hydraulisch gesteuerter Blockiereinrichtung,
- Fig. 2b: einen schematischen Hydraulikschaltplan des Ausführungsbeispiels gemäß Figur 2a mit dem Absperrventil in einer Öffnungsstellung,
- Fig. 3a: einen schematischen Hydraulikschaltplan eines weiteren Ausführungsbeispiels eines erfindungsgemäßen Absperrventils in einer Zwischenstellung mit elektronisch gesteuerter Blockiereinrichtung,
- Fig. 3b: einen schematischen Hydraulikschaltplan des Ausführungsbeispiels gemäß Figur 3a mit dem Absperrventil in einer Öffnungsstellung,
- Fig. 4a: einen schematischen Hydraulikschaltplan eines weiteren Ausführungsbeispiels eines erfindungsgemäßen Absperrventils in einer Zwischenstellung mit hydraulisch gesteuerter Blockiereinrichtung und
- Fig. 4b: einen schematischen Hydraulikschaltplan des Ausführungsbeispiels gemäß Figur 4a mit dem Absperrventil in einer Öffnungsstellung.

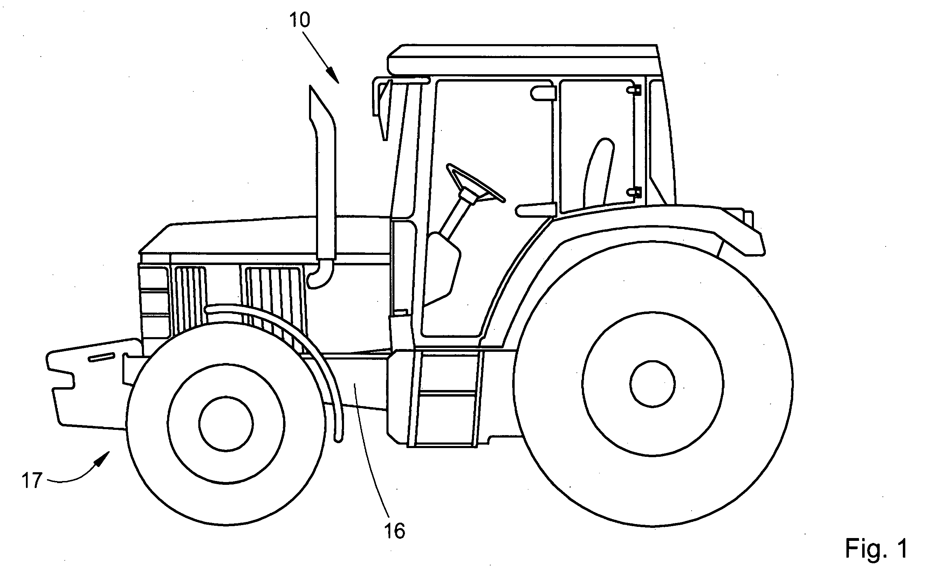

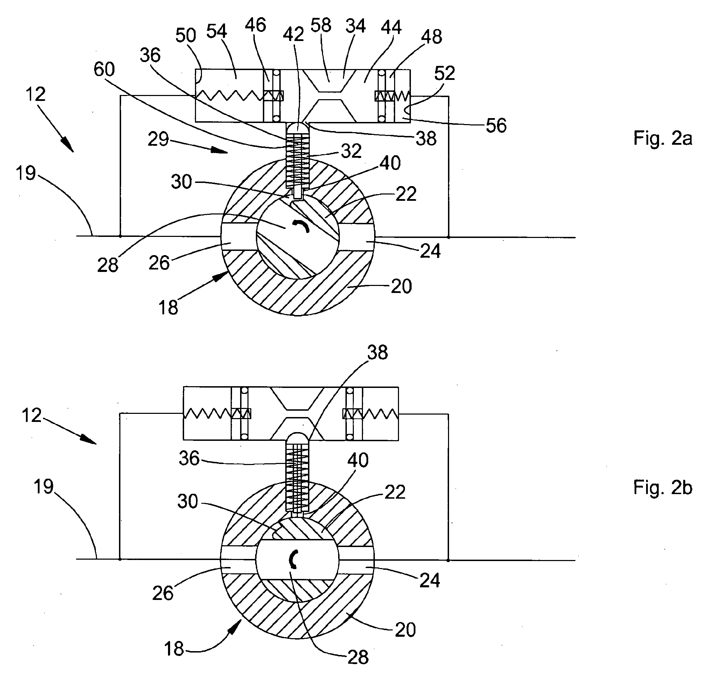

Figur 1 zeigt ein landwirtschaftliches Fahrzeug 10 in Form eines Traktors oder Schleppers, der eine erfindungsgemäße hydraulische Anordnung 12, 14, 15 gemäß den Figuren 2a, 2b, 3a, 3b und 4a, 4b umfasst. Die in den Figuren 2a und 2b, 3a und 3b sowie 4a und 4b schematisch dargestellten hydraulischen Anordnungen sind nur beispielhaft in Verbindung mit dem Traktor beschrieben und können in gleicher Weise auch in anderen landwirtschaftlichen Fahrzeugen, wie Erntemaschinen, Pflanzenschutzmaschinen, Pflanz- und Sämaschinen aber auch in Bau- und Forstmaschinen Anwendung finden.

Das Fahrzeug 10 umfasst einen Rahmen 16, an dem an einem vorderen Bereich 17 eine hydraulische Vorderachsfederung vorgesehen ist (nicht gezeigt). Die hydraulische Vorderachsfederung umfasst eine der hydraulischen Anordnungen 12, 14, 15 gemäß den Figuren 2a und 2b, 3a und 3b, sowie 4a und 4b. Die in den Figuren 2a und 2b, 3a und 3b sowie 4a und 4b dargestellten hydraulischen Anordnungen 12, 14, 15 können ferner auch in Verbindung mit anderen hydraulisch betriebenen Komponenten und Geräten am Fahrzeug 10 Anwendung finden.

In den Figuren 2a und 2b ist jeweils ein Absperrhahn bzw. Absperrventil 18 in Form eines Kugelhahns oder Kugelventils dargestellt, welches in einer hydraulischen Leitung 19 der hydraulischen Anordnung 12 angeordnet ist. Die hydraulische Leitung 19 dient beispielsweise der Versorgung der hydraulischen Federung des Fahrzeugs 10 gemäß Figur 1.

Das Absperrventil 18 umfasst ein Ventilgehäuse 20 und ein Ventilschieber 22, der mittels eines Hebels (nicht gezeigt) manuell oder über eine Stelleinheit (nicht gezeigt) motorisch betätigbar ist. Der Ventilschieber 22 ist als Kugel ausgebildet und in einem entsprechend sphärisch ausgebildeten Innenraum des Ventilgehäuses 20 verdrehbar gelagert aufgenommen. Das Gehäuse 20 weist einen hydraulischen ersten Anschluss 24 sowie einen hydraulischen zweiten Anschluss 26 auf, wobei beide jeweils eine Verbindung zu der hydraulischen Leitung 19 herstellen. Der Ventilschieber 22 weist eine zentrische Bohrung 28 auf, die in einer Öffnungsstellung gemäß Figur 2b des Ventilschiebers 22 den ersten und den zweiten Anschluss 24, 26 des Ventilgehäuses 20 miteinander verbindet, wobei in dieser Öffnungsstellung ein maximaler Öffnungsquerschnitt zwischen dem ersten und dem zweiten Anschluss 24, 26 hergestellt ist.

Das Absperrventil 18 weist eine Blockiereinrichtung 29 auf. Die Blockiereinrichtung 29 umfasst eine am Ventilschieber 22 ausgebildete Aussparung 30 oder Nut (diese kann auch als Bohrung, Ausnehmung, Ausfräsung, Vertiefung oder dergleichen ausgebildet sein). Ferner umfasst die Blockiereinrichtung 29, dass das Ventilgehäuse 20 über einen zylindrischen Verbindungskanal 32 mit einem Stellzylinder 34 verbunden ist. In dem zylindrischen Verbindungskanal 32 ist ein Blockierelement 36 in Form eines zylindrischen Riegels angeordnet, der über eine erste Öffnung 38 in das Innere des Stellzylinders 34 und über eine zweite Öffnung 40 in das Innere des Ventilgehäuses 20 ragen kann, wobei das Blockierelement 36 mit der Aussparung 30 in Eingriff treten kann, sobald dieses durch die zweite Öffnung 40 in das Innere des Ventilgehäuses 20 geführt wird. Das Blockierelement 36 weist einen nockenförmigen Steuerkopf 42 auf der mit einem im Stellzylinder 34 verschiebbar gelagerten Stellkolben 44 in Eingriff treten kann, wobei der Stellkolben 44 einen ersten und einen zweiten Stellkolbenkopf 46, 48 umfasst, die jeweils stirnseitig mit Stirnwänden 50, 52 des Stellzylinders 34 eine Steuerdruckkammer 54, 56 begrenzen, wobei die Steuerdruckkammern 54 ausgangsseitig und die Steuerdruckkammer 56 eingangsseitig vom Absperrventil 18 mit der hydraulischen Leitung 19 hydraulisch verbunden sind. Zwischen den Stellkolbenköpfen 46, 48 ist der Stellkolben 44 mit einer rotationssymmetrischen Einbuchtung 58 versehen, so dass der nockenförmige Steuerkopf 42 des Blockierelements 36 durch die erste Öffnung 38 zwischen den Stellkolbenköpfen 46, 48 in das Innere des Stellzylinders 34 ragen kann (siehe dazu Figur 2b). Dazu ist das Blockierelement 36 in dem zylindrischen Verbindungskanal 32 mit einer Feder 60 in Richtung des Stellzylinders 34 vorgespannt, so dass das Blockierelement 36 von den Stellkolbenköpfen 46, 48 durch die zweite Öffnung in das Innere des Ventilgehäuses 20 bewegt werden muss. Sollte nun in beiden Steuerdruckkammern 54, 56 der gleiche Druck herrschen, so nimmt der Stellkolben 44 eine mittlere Stellung ein (siehe Figur 2b), in der sich das Blockierelement 36 mit seinem Steuerkopf 42 im Inneren des Stellzylinders 34 befindet. Stellt sich nun zwischen den Steuerdruckkammern 54, 56 eine Druckdifferenz ein, so bewegt sich der Stellkolben 44 in Richtung einer entsprechenden Stirnseite des Stellzylinders 34, woraufhin der nockenförmige Steuerkopf 42 des Blockierelements 36 durch den entsprechenden Stellkolbenkopf 46 oder 48 durch die zweite Öffnung 40 in das Innere des Ventilgehäuses 20 gedrückt bzw. bewegt wird. Gleichzeitig tritt das Blockierelement 36 mit der Aussparung 30 in Eingriff und blockiert den Ventilschieber 22 gegen Verdrehen in eine Öffnungsstellung bzw. begrenzt eine Betätigung des Ventilschiebers 22 auf ein Verdrehen in eine Zwischenstellung gemäß Figur 2a, in der nur ein Bruchteil des Öffnungsquerschnitts der ersten und zweiten Anschlüsse erzielt bzw. das Absperrventil nur partiell bzw. teilweise geöffnet wird. Erst wenn sich durch langsames und kontrolliertes Durchströmen der Bohrung 28 bzw. des ersten und des zweiten Anschlusses 24, 26 wieder ein Druckgleichgewicht zwischen den Steuerdruckkammern 54, 56 eingestellt hat, stellt sich in Folge dessen eine Aufhebung der Blockierung des Ventilschiebers ein, indem sich der Stellkolben 34 in seine mittlere Stellung bewegt und das Blockierelement 36 durch die Feder 60 in das Innere des Stellzylinders 34 zwischen die Stellkolbenköpfe 44, 46 bewegt wird, woraufhin der Ventilschieber 22 in eine Öffnungsstellung mit maximalem Öffnungsquerschnitt gemäß Figur 2b verdreht werden kann. Selbstverständlich kann der Ventilschieber 22 jederzeit in eine Schließstellung verdreht werden (nicht gezeigt), die sich einstellt, sobald sich keine Überlappung der Öffnungen der Bohrung 28 des Ventilschiebers 22 und des ersten bzw. zweiten Anschlusses 24, 26 ergibt. Es ist ferner, wie bei Absperrkugelhähnen üblich, ein vorzugsweise beidseitiger Anschlag (nicht gezeigt) am Ventilgehäuse 20 vorgesehen, der sicherstellt, dass der Ventilschieber 22 zum einen nicht über seine Öffnungsstellung und Schließstellung hinaus und zum anderen ausgehend von der Schließstellung oder Öffnungsstellung nur in eine Richtung
verdrehbar ist.

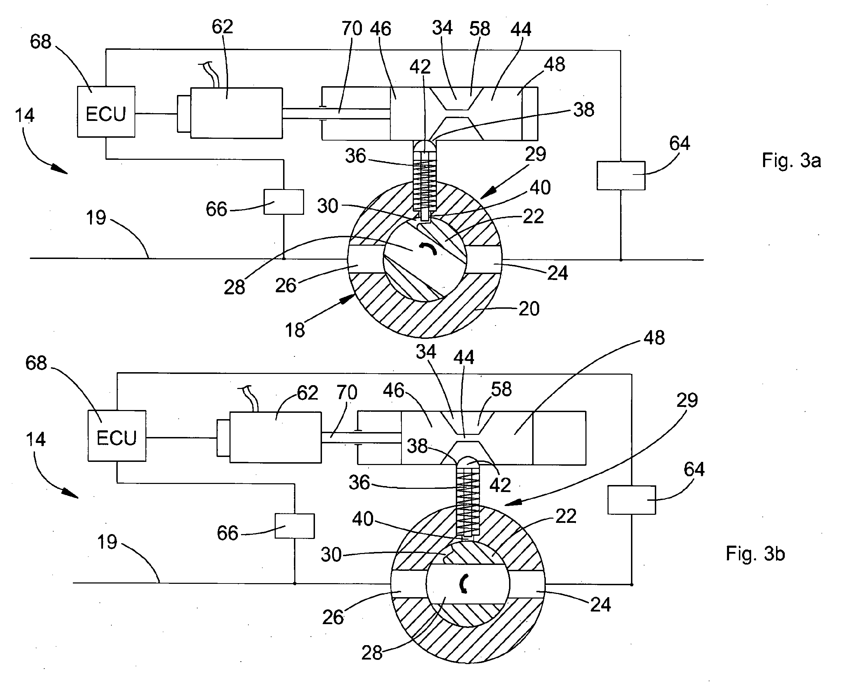

Ein alternatives bzw. weiteres Ausführungsbeispiel ist in den Figuren 3a und 3b dargestellt. Im Unterschied zu dem in den Figuren 2a und 2b dargestellten Beispiel ist an Stelle einer hydraulischen Ansteuerung oder Steuerung eine elektronische Ansteuerung bzw. Steuerung der Blockiereinrichtung 29 gewählt, wobei das Ventilgehäuse 20, der Ventilschieber 22 mit gleicher Aussparung 30, der Stellzylinder 34, der Stellkolben 44 mit seinen Stellkolbenköpfen 46, 48 und der Einbuchtung 58, der Verbindungskanal 32 mit Blockierelement 36 und Feder 60 sowie alle diesbezüglich relevanten Komponenten entsprechend Figur 2a und 2b beibehalten wurden. Der wesentliche Unterschied besteht darin, dass die Steuerdruckkammern 54, 56 entfallen und der Stellkolben 44 nicht unmittelbar wegen eines Druckunterschiedes in den im Stellzylinder 34 ausgebildeten Steuerdruckkammern 54 bewegt wird, sondern der Stellkolben 44 durch elektrisch betriebene Stellmittel 62, vorzugsweise einem Stell- oder Schrittmotor, bewegt wird. Ferner ist ein Drucksensor 64 zur Erfassung des Drucks in der hydraulischen Leitung 19 auf der Seite des Ersten Anschluss 24 des Absperrventils 18 und ein Drucksensor 66 zur Erfassung des Drucks in der hydraulischen Leitung 19 auf der Seite des zweiten Anschlusses 26 des Absperrventils 18 angeordnet. Beide Drucksignale werden an eine elektronische Steuereinheit 68 geleitet, die wiederum ein Steuersignal für die elektrisch betriebenen Stellmittel generiert. Die Stellmittel 62 sind beispielsweise über eine Stellspindel 70 mit dem Stellkolben 44 verbunden, über die der Stellkolben 44 in Abhängigkeit der Druckdifferenzen zwischen den Drucksensoren 64, 66 analog zu der hydraulisch angesteuerten Blockiereinrichtung 29 aus Figur 2a und 2b bewegt wird, wobei das Blockierelement 36 entsprechend durch die Bewegung des Stellkolbens 44 von einer Eingriffstellung mit der Aussparung 30 in eine Stellung, in der sich das Blockierelement 36 mit seinem Steuerkopf 42 im Inneren des Stellzylinders 34 befindet, bewegt wird.

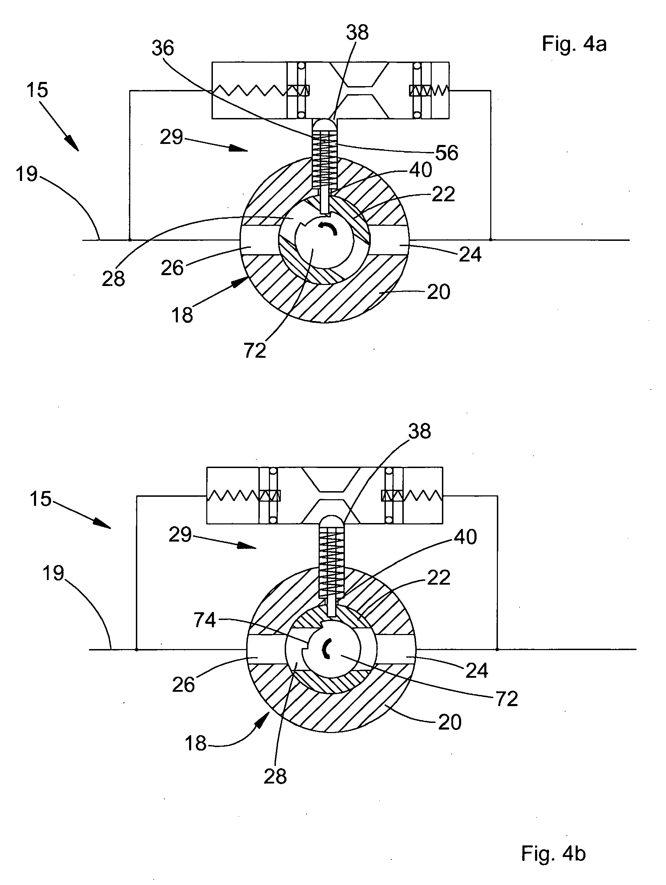

Ein weiteres Ausführungsbeispiel ist in den Figuren 4a und 4b dargestellt, dem wiederum eine hydraulische Ansteuerung der Blockiereinrichtung 29 gemäß den Figuren 2a und 2b zu Grunde liegt. Der Unterschied hier besteht darin, dass die Anordnung der Blockiereinrichtung 29 etwas verändert ist, dahingehend, dass an Stelle der Aussparung 30 aus den Figuren 2a, 2b, 3a, 3b, die dort direkt an dem drehbar gestalteten Ventilschieber 22 ausgebildet ist, bei dem in den Figuren 4a und 4b dargestellten Beispiel ein Ventilschieberelement 72 in Form einer Kreisscheibe gewählt wurde, wobei das Ventilschieberelement 72 drehfest mit dem Ventilschieber 22 verbunden ist. Die Kreisscheibe kann beispielsweise an einer mit dem Ventilschieber verbundenen Verstellwelle ausgebildet sein bzw. an diese drehfest befestigt sein. Der Verbindungskanal 56 sowie die Anordnung des Blockierelements 36 ist derart angeordnet, dass dieses durch Bewegen auf der gemäß den Figuren 2a und 2b beschrieben Art und Weise mit einer an dem Ventilschieberelement 72 (Kreisscheibe) ausgebildeten Aussparung 74 in Form eines Kreisbogenausschnittes in Eingriff bringbar ist. Die übrigen Komponenten sowie die Funktionsweise des anhand der Figuren 4a und 4b beschriebenen Ausführungsbeispiels ist dem in Bezug auf die Figuren 2a und 2b beschriebenen Ausführungsbeispiel identisch.

## Patentansprüche

1. Absperrventil (18) für eine hydraulische Anordnung (12,14, 15), mit einem betätigbaren Ventilschieber (22), zum Einstellen einer Schließstellung und einer Öffnungsstellung, **dadurch gekennzeichnet , dass** eine Blockiereinrichtung (29) zur Begrenzung der Betätigung des Ventilschiebers (22) auf eine zwischen der Schließstellung und der Öffnungsstellung befindliche Zwischenstellung vorgesehen ist, in welcher der Öffnungsquerschnitt des Absperrventils (18) nur einen Bruchteil des in der Öffnungsstellung vorliegenden Öffnungsquerschnitts beträgt, wobei die Blockiereinrichtung (29) derart ausgebildet ist, dass die Begrenzung der Betätigung des Ventilschiebers (22) durch die Blockiereinrichtung (29) in Abhängigkeit von einem Druckdifferenzwert zwischen einem Druck vor und hinter dem Absperrventil (18) erfolgt, wobei die Begrenzung bei Unterschreiten eines vorgebbaren Druckdifferenzwerts aufhebbar ist.

2. Absperrventil (18) nach Anspruch 1, **dadurch gekennzeichnet, dass** die Blockiereinrichtung (29) ein Blockierelement (36) umfasst, welches mit dem Ventilschieber (22) oder mit einem mit dem Ventilschieber (22) verbundenen Ventilschieberelement (72) in Eingriff bringbar ist, um die Betätigung des Ventilschiebers (22) in Richtung der Öffnungsstellung auf die Zwischenstellung zu begrenzen.

3. Absperrventil (18) nach einem der Ansprüche 1 oder 2, **dadurch gekennzeichnet, dass** der Ventilschieber (22) als Drehschieber ausgebildet ist und durch Verdrehen von einer Schließstellung in eine Öffnungsstellung bzw. Zwischenstellung bringbar ist.

4. Absperrventil (18) nach einem der Ansprüche 1 bis 3, **dadurch gekennzeichnet, dass** das Absperrventil (18) als Kugelventil und der Ventilschieber (22) als Kugelventilschieber ausgebildet ist und durch Verdrehen von einer Schließstellung in eine Öffnungsstellung bzw. Zwischenstellung bringbar ist.

5. Absperrventil (18) nach einem der Ansprüche 2 bis 4, **dadurch gekennzeichnet, dass** das Blockierelement (36) durch einen in Abhängigkeit der Druckdifferenz hydraulisch gesteuerten Stellkolben (44) verstellbar ist, wobei das Blockierelement (36) durch den Stellkolben (44) in eine Blockierstellung bringbar ist, in der das Blockierelement (36) mit dem Ventilschieber (22) oder mit einem damit verbundenen Ventilschieberelement (72) in Eingriff steht und die Betätigung des Ventilschiebers (22) in Richtung der Öffnungsstellung bis auf die Zwischenstellung begrenzt.

6. Absperrventil (18) nach einem der Ansprüche 2 bis 4, **dadurch gekennzeichnet, dass** das Blockierelement (36) durch in Abhängigkeit der Druckdifferenz elektronisch ansteuerbare Stellmittel (62) verstellbar ist, wobei das Blockierelement (36) durch die Stellmittel (62) in eine Blockierstellung bringbar ist, in der das Blockierelement (36) mit dem Ventilschieber (22) oder mit einem damit verbundenen Ventilschieberelement (72) in Eingriff steht und die Betätigung des Ventilschiebers (22) in Richtung der Öffnungsstellung bis auf die Zwischenstellung begrenzt.

7. Absperrventil nach Anspruch 5 oder 6, **dadurch gekennzeichnet, dass** das Blockierelement (36) als Riegel und an dem Ventilschieber (22) oder dem Ventilschieberelement (72) eine Aussparung (30, 74) ausgebildet ist, in die der Riegel eingreift und ein weiteres Verdrehen des Ventilschiebers (22) in Richtung der Öffnungsstellung über die Zwischenstellung hinaus blockiert.

8. Landwirtschaftliches Fahrzeug (10) mit einer hydraulischen Anordnung (12, 14, 15) zur Versorgung hydraulischer Verbraucher, **dadurch gekennzeichnet, dass** die hydraulische Anordnung (12, 14, 15) ein Absperrventil (18) nach einem der vorhergehenden Ansprüche umfasst.

## Claims

1. Blocking valve (18) for a hydraulic arrangement (12, 14, 15), with an actuable valve slide (22) for setting a closed position and an open position, **characterized in that** a blocking device (29) is provided for limiting the actuation of the valve slide (22) to an intermediate position which is located between the closed position and the open position and in which the opening cross section of the blocking valve (18) is only a fraction of the opening cross section present in the open position, wherein the blocking device (29) is designed in such a manner that the limitation of the actuation of the valve slide (22) by the blocking device (29) takes place depending on a pressure differential value between a pressure upstream and downstream of the blocking valve (18), wherein the limitation can be cancelled if the value falls below a predeterminable pressure differential value.

2. Blocking valve (18) according to Claim 1, **characterized in that** the blocking device (29) comprises a blocking element (36) which can be brought into engagement with the valve slide (22) or with a valve slide element (72) connected to the valve slide (22), in order to limit the actuation of the valve slide (22) in the direction of the open position to the intermediate position.

3. Blocking valve (18) according to either of Claims 1 and 2, **characterized in that** the valve slide (22) is designed as a rotary slide valve and can be brought by rotation from a closed position into an open position or intermediate position.

4. Blocking valve (18) according to one of Claims 1 to 3, **characterized in that** the blocking valve (18) is designed as spherical valve, and the valve slide (22) is designed as spherical valve slide and can be brought by rotation from a closed position into an open position or intermediate position.

5. Blocking valve (18) according to one of Claims 2 to 4, **characterized in that** the blocking element (36) is adjustable by an adjusting piston (44) which is hydraulically controlled depending on the pressure differential, wherein the blocking element (36) can be brought by the adjusting piston (44) into a blocking position in which the blocking element (36) is in engagement with the valve slide (22) or with a valve slide element (72) connected thereto and limits the actuation of the valve slide (22) in the direction of the open position up to the intermediate position.

6. Blocking valve (18) according to one of Claims 2 to 4, **characterized in that** the blocking element (36) is adjustable by adjusting means (62) which are electronically activatable depending on the pressure differential, wherein the blocking element (36) can be brought by the adjusting means (62) into a blocking position in which the blocking element (36) is in engagement with the valve slide (22) or with a valve slide element (72) connected thereto and limits the actuation of the valve slide (22) in the direction of the open position up to the intermediate position.

7. Blocking valve according to Claim 5 or 6, **characterized in that** the blocking element (36) is in the form of a catch, and a recess (30, 74) is formed on the valve slide (22) or on the valve slide element (72), in which recess the catch engages and blocks a further rotation of the valve slide (22) beyond the intermediate position in the direction of the open position.

8. Agricultural vehicle (10) with a hydraulic arrangement (12, 14, 15) for the supply of hydraulic consumers, **characterized in that** the hydraulic arrangement (12, 14, 15) comprises a blocking valve (18) according to one of the preceding claims.

## Revendications

1. Soupape d'arrêt (18) pour un agencement hydraulique (12, 14, 15) comprenant un tiroir de soupape commandable (22) pour l'ajustement d'une position de fermeture et d'une position d'ouverture, **caractérisée en ce qu'**un dispositif de blocage (29) est prévu pour limiter la commande du tiroir de soupape (22) à une position intermédiaire située entre la position de fermeture et la position d'ouverture, dans laquelle la section transversale d'ouverture de la soupape d'arrêt (18) ne constitue qu'une fraction de la section transversale d'ouverture existant dans la position d'ouverture, le dispositif de blocage (29) étant réalisé de telle sorte que la limitation de la commande du tiroir de soupape (22) par le dispositif de blocage (29) s'effectue en fonction d'une valeur de différence de pression entre une pression avant et après la soupape d'arrêt (18), la limitation pouvant être supprimée si l'on passe en dessous d'une valeur de différence de pression prédéfinissable.

2. Soupape d'arrêt (18) selon la revendication 1, **caractérisée en ce que** le dispositif de blocage (29) comprend un élément de blocage (36) qui peut être amené en prise avec le tiroir de soupape (22) ou avec un élément de tiroir de soupape (72) connecté au tiroir de soupape (22), afin de limiter la commande du tiroir de soupape (22) dans la direction de la position d'ouverture à la position intermédiaire.

3. Soupape d'arrêt (18) selon l'une quelconque des revendications 1 ou 2, **caractérisée en ce que** le tiroir de soupape (22) est réalisé sous forme de tiroir rotatif et peut être amené par rotation d'une position de fermeture dans une position d'ouverture ou dans une position intermédiaire.

4. Soupape d'arrêt (18) selon l'une quelconque des revendications 1 à 3, **caractérisée en ce que** la soupape d'arrêt (18) est réalisée sous forme de soupape sphérique et le tiroir de soupape (22) est réalisé sous forme de tiroir de soupape sphérique et peut être amené par rotation d'une position de fermeture dans une position d'ouverture ou dans une position intermédiaire.

5. Soupape d'arrêt (18) selon l'une quelconque des revendications 2 à 4, **caractérisée en ce que** l'élément de blocage (36) peut être réglé par un piston de réglage (44) commandé hydrauliquement en fonction de la différence de pression, l'élément de blocage (36) pouvant être amené par le piston de réglage (44) dans une position de blocage dans laquelle l'élément de blocage (36) est en prise avec le tiroir de soupape (22) ou avec un élément de tiroir de soupape (72) connecté à celui-ci et limite la commande du tiroir de soupape (22) dans la direction de la position d'ouverture jusqu'à la position intermédiaire.

6. Soupape d'arrêt (18) selon l'une quelconque des revendications 2 à 4, **caractérisée en ce que** l'élément de blocage (36) peut être réglé par des moyens de réglage (62) pouvant être commandés de manière électronique en fonction de la différence de pression, l'élément de blocage (36) pouvant être amené par les moyens de réglage (62) dans une position de blocage dans laquelle l'élément de blocage (36) est en prise avec le tiroir de soupape (22) ou avec un élément de tiroir de soupape (72) connecté à celui-ci et limite la commande du tiroir de soupape (22) dans la direction de la position d'ouverture jusqu'à la position intermédiaire.

7. Soupape d'arrêt selon la revendication 5 ou 6, **caractérisée en ce que** l'élément de blocage (36) est réalisé sous forme de verrou et, un évidement (30, 74) est réalisé au niveau du tiroir de soupape (22) ou de l'élément de tiroir de soupape (72), dans lequel le verrou s'engage et bloque une rotation supplémentaire du tiroir de soupape (22) dans la direction de la position d'ouverture au-delà de la position intermédiaire.

8. Véhicule agricole (10) comprenant un agencement hydraulique (12, 14, 15) pour l'alimentation de consommateurs hydrauliques, **caractérisé en ce que** l'agencement hydraulique (12, 14, 15) comprend une soupape d'arrêt (18) selon l'une quelconque des revendications précédentes.
